(19) **Europäisches Patentamt / European Patent Office / Office européen des brevets**

(11) **EP 4 675 002 A1**

(12) **EUROPEAN PATENT APPLICATION**
published in accordance with Art. 153(4) EPC

(43) Date of publication:
07.01.2026 Bulletin 2026/02

(21) Application number: 24796871.2

(22) Date of filing: 16.04.2024

(51) International Patent Classification (IPC):
$C22C\ 38/00^{(2006.01)}$  $C21D\ 8/02^{(2006.01)}$
$C21D\ 9/18^{(2006.01)}$  $C21D\ 9/46^{(2006.01)}$
$C22C\ 38/58^{(2006.01)}$

(52) Cooperative Patent Classification (CPC):
Y02P 10/20

(86) International application number:
PCT/JP2024/015180

(87) International publication number:
WO 2024/225118 (31.10.2024 Gazette 2024/44)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 26.04.2023 JP 2023072690

(71) Applicant: NIPPON STEEL CORPORATION
Chiyoda-ku
Tokyo 100-8071 (JP)

(72) Inventors:
• **NISHIMURA, Kou**
  **Tokyo 100-0005 (JP)**
• **ISHIMARU, Eiichiro**
  **Tokyo 100-0005 (JP)**

(74) Representative: **Zimmermann & Partner Patentanwälte mbB**
**P.O. Box 330 920**
**80069 München (DE)**

(54) **MARTENSITIC STAINLESS-STEEL MATERIAL, METHOD FOR PRODUCING SAME, AND METHOD FOR PRODUCING CUTTING ARTICLE**

(57)    A martensitic stainless steel material has a composition including, on a mass basis, C: 0.305 to 0.600%; Si: 0.05 to 1.00%; Mn: 0.05 to 2.50%; P: 0.0085 to 0.0400%; S: 0.0300% or less; Cr: 13.0 to 18.0%; Ni: 0.01 to 1.00%; Mo: 0.01 to 1.00%; Al: 0.100% or less; N: 0.010 to 0.350%; Ca: 0.0001 to 0.0050%; and O: 0.001 to 0.010%, the balance being Fe and impurities. The martensitic stainless steel material has: an average grain diameter of carbides of 0.50 μm or less; a number of carbides having a size of 10 μm or more of 0.10 carbides/cm$^2$ or less; a Vickers hardness of 320 HV or less before hardening or hardening and tempering; an amount of residual austenite of 10.0% by volume or less after hardening or hardening and tempering; and [C] + 0.3 [N] of 0.15% by mass or more, in which [C] is an amount of solid solution of C (% by mass) and [N] is an amount of solid solution of N (% by mass) after hardening or hardening and tempering.

EP 4 675 002 A1

**Description**

[Technical Field]

The present invention relates to a martensitic stainless steel material, a method for producing the same, and a method for producing a cutting article.

[Background Art]

Stainless steel materials used for various cutting tools such as shavers, scissors, and kitchen knives require high hardness. Therefore, a martensitic stainless steel material having a higher C content is used (for example, Patent Literature 1).

However, the higher C content results in production of carbides with alloy elements such as Cr, which tend to be deposited as coarse eutectic carbides during the production step. Complete solutionizing of the eutectic carbides is difficult even by an annealing step or the like, which will decrease an amount of solid solution of C during hardening or hardening and tempering to cause excessive softening. Further, the eutectic carbides serve as starting points for corrosion, resulting in a decrease in corrosion resistance and causing nicks and streaky or island-shaped irregular patterns during processing. Furthermore, since C is a strong austenite stabilizing element, if a large amount of residual austenite remains after hardening or hardening and tempering due to C segregation or the like, it can lead to a decrease in hardness, deterioration of sharpness, and the formation of streaky or island-shaped irregular patterns.

Therefore, Patent Literature 2 proposes a martensitic stainless steel material for cutting articles, wherein the martensitic stainless steel material contains, in percent by mass, C: 0.40 to 0.50%; Si: 0.05 to 0.60%; Mn: 0.5 to 1.5%; P: 0.035 % or less; S: 0.010% or less; Cr: 11.0 to 15.5%; Ni: 0.01 to 0.30%; Cu: 0.01 to 0.30%; Mo: 0.01 to 0.30%; V: 0.01 to 0.10%; Al: 0.02% or less; Sn: 0.002 to 0.10%; N: 0.010 to 0.035%; Ca: 0.0001 to 0.0010%; O: 0.001 to 0.01%, the balance being Fe and unavoidable impurities, and wherein the martensitic stainless steel material satisfies Cu + Ni + Mo = 0.05 to 0.30%, and wherein the number of inclusions having a size of 10 $\mu$m or more is 0.2/cm$^2$ or less.

Further, Patent Literature 3 propose a method for producing a grain-refined martensitic stainless steel material, the method comprising the steps of: preparing a substrate having a composition including Cr: 13.0 to 14.0% by weight; Mo: 1.15 to 1.35% by weight; C: 0.35 to 0.55% by weight; Si: 0.20 to 0.50% by weight; Mn: 0.20 to 0.50% by weight; P: 0.025% by weight or less; S: 0.020% by weight or less, the balance being Fe and unavoidable impurity elements; subjecting the substrate to at least one of a high-density dislocation generation process and an ultra-rapid solidification process, followed by annealing to obtain a ferrite steel having a fine structure; subjecting the ferrite steel to cold rolling, annealing, and optionally plastic working into a predetermined shape, followed by hardening to obtain a grain-refined martensitic stainless steel material.

Patent Literature 4 also proposes a method for producing a martensitic stainless steel material (martensitic stainless steel sheet) wherein a stainless steel sheet material having a thickness of 0.1 mm or less and a component composition comprising C: 0.25 to 0.45% by mass; Si: 1.0% by mass or less; Mn: 0.1 to 1.5% by mass; Cr: 12.0 to 15.0% by mass; Mo: 0.5 to 3.0% by mass; N: 0.30 to 0.45% by mass, the balance being Fe and impurities, is subjected to a heat treatment in which the material is heated at a temperature higher than 1000°C for 1 to 10 minutes in a nitrogen atmosphere and then cooled to obtain a martensitic stainless steel material having a controlled number density of carbides having an equivalent circle diameter of 0.5 $\mu$m or more of 0 to 50 carbides/1000 $\mu$m$^2$. It also discloses that the martensitic stainless steel material produced by this method has good corrosion resistance as well as high hardness from its entire surface to the center of the sheet thickness when it is hardened and tempered.

Furthermore, Patent Literature 5 proposes a method for producing a martensitic stainless steel material (stainless steel sheet), the method comprising: a first step of maintaining a steel slab at 1200 to 1350°C for 30 minutes or more, the steel slab having a composition including, in % by mass, C: 0.45 to 0.60%; Si: 0.05 to 1.00%; Mn: 0.05 to 1.00%; P: 0.05% or less; S: 0.020% or less; Cr: 13.0% or more and less than 16.0%; Ni: 0.10 to 1.00%; and N: 0.010 to 0.200%, the balance being Fe and unavoidable impurities; and a second step of hot-rolling the steel slab to produce a hot-rolled steel sheet, which is then wound; and a third step of subjecting the hot-rolled steel sheet to hot-rolled sheet annealing to produce a hot-rolled annealed steel sheet, wherein rolling passes in the hot rolling of the second step includes three or more rolling passes at an end temperature of 1050°C or higher and a reduction in thickness of 20% or more, wherein a winding temperature of the hot-rolled steel sheet is 600°C or higher, and wherein a maintaining temperature in the hot-rolled sheet annealing of the third step is 750 to 900°C, and a maintaining time is 10 minutes or more. It also discloses that the martensitic stainless steel material produced by this method has high hardness and good surface quality.

[Citation List]

[Patent Literatures]

[Patent Literature 1] Japanese Patent Application Publication No. 2000-273587 A
[Patent Literature 2] Japanese Patent Application Publication No. 2018-9231 A
[Patent Literature 3] Japanese Patent Application Publication No. 2003-313612 A
[Patent Literature 4] WO 2019/146743 A1
[Patent Literature 5] WO 2021/220754 A1

[Summary of Invention]

[Technical Problem]

However, in the martensitic stainless steel material as described in Patent Literature 2, an average grain diameter of inclusions (especially carbides) is not controlled, so that workability may be insufficient and irregular patterns may be generated.

The martensitic stainless steel material as described in Patent Literature 3 is not suitable for mass production because special steps such as the high-density dislocation generation process and the ultra-rapidly solidification process are introduced. Furthermore, this martensitic stainless steel material has a higher Mo content and is expensive.

The martensitic stainless steel material described in Patent Literature 4 is expensive because it employs a nitrogen absorption treatment in which a heat treatment is performed in a nitrogen atmosphere to increase nitrogen and dissolve coarse carbides. It is also difficult to use the martensitic stainless steel material for catting articles such as knives because it is limited to a thin sheet having a thickness of 0.1 mm or less.

For the martensitic stainless steel described in Patent Literature 5, it dissolves coarse carbides by heating the steel slab at an elevated temperature of 1200 to 1350°C, but this heating alone does not suppress the C segregation that will cause the coarse carbides. This leads to redeposition of coarse carbides, formation of residual austenite due to C segregation, and softening, resulting in lower hardness and irregular patterns. Heating the slab at excessively high temperatures is also likely to cause deformation of the slab due to its own weight.

Such conventional martensitic stainless steel materials with an increased C content have the above problems.

Cutting articles such as knives are mainly manufactured by forging and grinding a martensitic stainless steel material to form product shapes, then hardening the material by hardening and subzero treatment, and ensuring toughness by tempering. If the martensitic stainless steel is excessively hardened before hardening, workability by forging or grinding is reduced, making it difficult to form it into the desired product shape.

This invention has been made to solve the above problems. An object of this invention is to provide a martensitic stainless steel material, which has good workability because it is soft after hardening or hardening and tempering, and also has higher hardness and corrosion resistance after hardening or hardening and tempering, and can suppress generation of irregular patterns, and to provide a method for producing the same.

A further object of this invention is to provide a method for producing a cutting tool that is easily machined, has high hardness and corrosion resistance, has a good sharpness, and can also suppress the generation of irregular patterns.

[Solution to Problem]

As a result of extensive studies for martensitic stainless steel materials, the inventors have found that an average grain size of carbides, the number of carbides having a size of 10 $\mu$m or more, a Vickers hardness before hardening or hardening and tempering, an amount of residual austenite after hardening or hardening and tempering, and an amount of solid solution of C and N after hardening or hardening and tempering are closely related to workability, corrosion resistance and irregular patterns. Then, the inventors have found that all of the above problems can be solved by controlling, in addition to the steel composition, the average grain size of carbides, the number of carbides having a size of 10 $\mu$m or more, the Vickers hardness before hardening or hardening and tempering, the amount of residual austenite after hardening or hardening and tempering, and the amount of solid solution of C and N after hardening or hardening and tempering.

Thus, this invention relates to a martensitic stainless steel material having a composition comprising, on a mass basis, C: 0.305 to 0.600%; Si: 0.05 to 1.00%; Mn: 0.05 to 2.50%; P: 0.0085 to 0.0400%; S: 0.0300% or less; Cr: 13.0 to 18.0%; Ni: 0.01 to 1.00%; Mo: 0.01 to 1.00%; Al: 0.100% or less; N: 0.010 to 0.350%; Ca: 0.0001 to 0.0050%; and O: 0.001 to 0.010%, the balance being Fe and impurities, wherein the martensitic stainless steel material has:

an average grain diameter of carbides of 0.50 $\mu$m or less;

a number of carbides having a size of 10 $\mu$m or more of 0.10 carbides/cm$^2$ or less;
a Vickers hardness of 320 HV or less before hardening or hardening and tempering;
an amount of residual austenite of 10.0% by volume or less after hardening or hardening and tempering; and
[C] + 0.3[N] of 0.15% by mass or more, in which[C] is an amount of solid solution of C (% by mass) and[N] is an amount of solid solution of N (% by mass) after hardening or hardening and tempering.

This invention also relates to a method for producing a martensitic stainless steel material, the method comprising: a breakdown rolling step of subjecting a slab to a heat treatment at a temperature of 1000°C or higher and lower than 1200°C for 1 to 10 hours, and then rough-rolling it under conditions of the total reduction in thickness of 30 to 70% and including two or more passes with a reduction in thickness of 10% or more per pass, the slab having a composition comprising, on a mass basis, C: 0.305 to 0.600%; Si: 0.05 to 1.00%; Mn: 0.05 to 2.50%; P: 0.0085 to 0.0400%; S: 0.0300% or less; Cr: 13.0 to 18.0%; Ni: 0.01 to 1.00%; Mo: 0.01 to 1.00%; Al: 0.100% or less; N: 0.010 to 0.350%; Ca: 0.0001 to 0.0050%; and O: 0.001 to 0.010%, the balance being Fe and impurities;

a hot rolling step of subjecting the breakdown material to a heat treatment at a temperature of 1000°C or higher and lower than 1200°C for 1 to 5 hours and then hot-rolling it to obtain a hot rolled material; and
a softening step of winding the hot rolled material at a winding temperature of 800°C to 900°C, and then heating it at a temperature of Ac1 to (Ac1 point - 50°C) for 1 to 5 hours.

Further, this invention relates to a method for producing a cutting article, the method comprising a hardening step of processing the martensitic stainless steel material, then heating it at a temperature of 1000°C to 1200°C for 5 to 60 minutes and cooling it at a cooling rate of 3°C/s or more.

[Advantageous Effects of Invention]

According to this invention, it is possible to provide a martensitic stainless steel material, which has good workability because it is soft after hardening or hardening and tempering, has higher hardness and corrosion resistance after hardening or hardening and tempering, and can suppress generation of irregular patterns, and a method for producing the same.

Also, according to this invention, it is possible to provide a method for producing a cutting article that is easily machined, has high hardness and corrosion resistance, has good sharpness, and can suppress generation of irregular patterns.

[Brief Description of Drawings]

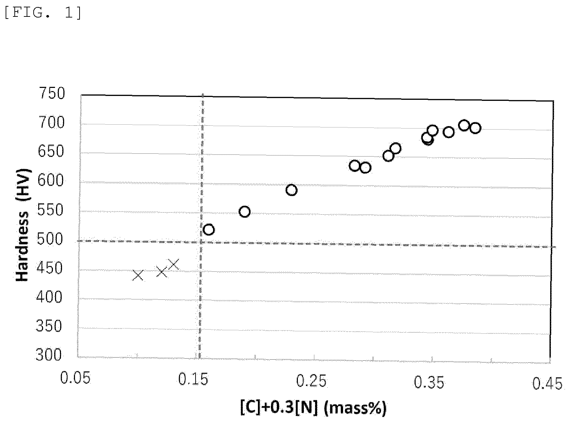

FIG. 1 is a graph illustrating a relationship between[C] + 0.3[N] in which[C] is an amount of solid solution of C (% by mass) and[N] is an amount of solid solution of N (% by mass) after hardening or hardening and tempering and a Vickers hardness according to Examples and Comparative Examples.

[Description of Embodiments]

Hereinafter, embodiments of the present invention will be specifically described. It should be understood that this invention is not limited to the following embodiments, and those which have appropriately added changes, improvements and the like to the following embodiments based on knowledge of a person skilled in the art without departing from the spirit of the invention fall within the scope of the invention.

It should be noted that, as used herein, the expression "%" in relation to any component means "% by mass", unless otherwise specified.

The martensitic stainless steel material according to an embodiment has a composition containing C: 0.305 to 0.600%; Si: 0.05 to 1.00%; Mn: 0.05 to 2.50%; P: 0.0085 to 0.0400%; S: 0.0300% or less; Cr: 13.0 to 18.0%; Ni: 0.01 to 1.00%; Mo: 0.01 to 1.00%; Al: 0.100% or less; N: 0.010 to 0.350%; Ca: 0.0001 to 0.0050%; O: 0.001 to 0.010%, the balance being Fe and impurities. In this composition, 2.5C + N is preferably 0.80 to 1.20%.

As used herein, the term "steel material" means materials having various shapes such as steel sheets. Further, the term "steel sheet" is a concept including a steel strip. Furthermore, the term "impurities" refers to components contaminated due to various factors of raw materials such as ores and scraps, and the production steps, during the industrial production of stainless steel materials, which are permissible within a range that does not adversely affect the present invention. Examples of the impurities include Zn, Pb, Se, Sb, H, Ga, Ta, Mg, Zr, and the like. When these elements are contained as impurities, Zn $\leq$ 100 ppm, Pb $\leq$ 100 ppm, Se $\leq$ 100 ppm, Sb $\leq$ 500 ppm, H $\leq$ 100 ppm, Ga $\leq$ 500 ppm, Ta $\leq$ 500 ppm, Mg $\leq$ 120 ppm, and Zr $\leq$ 120 ppm.

With respect to the content of each element as used herein, containing or comprising "xx % or less" means that it contains xx % or less but contains an amount more than 0% (especially, more than the impurity level).

Also, the martensitic stainless steel material according to an embodiment of this invention may further contain one or more selected from V: 0.50% or less, Nb: 0.50% or less, Ti: 0.30% or less, Cu: 4.0% or less, Sn: 0.10% or less, B: 0.005% or less, and Co: 0.30% or less.

Each component will be described in detail below.

<C: 0.305 to 0.600%>

C is an essential element for obtaining a predetermined hardness (Vickers hardness) after quenching or quenching and tempering. In order to stably obtain a hardness of 500 HV or more, the C content should be 0.305% or more. Excessive addition of C promotes sensitization during quenching and impairs corrosion resistance, and non-solid solution carbonitrides also reduce toughness after hardening or hardening or tempering. Therefore, the C content should be 0.600% or more. In view of a decrease in hardness and toughness due to variations in heating conditions during quenching or quenching and tempering, the C content preferably has a lower limit of 0.320% and an upper limit of 0.580%.

<Si: 0.05 to 1.00%>

Si is required for deoxidization during melting and refining, as well as Si is also a useful element for suppressing the formation of oxide scales during quenching. Further, when the Si content is lower, deoxidation tends to be insufficient and more carbides are generated, which may be the starting points for rusting, resulting in a decrease in corrosion resistance. Therefore, the Si content should be 0.05% or more. On the other hand, Si narrows an austenite single-phase temperature range and impairs quenching stability. Therefore, the Si content should be 1.00% or less. From the viewpoint of stably obtaining the above effects of Si, the Si content preferably has a lower limit of 0.07% and an upper limit of 0.98%.

<Mn: 0.05 to 2.50%>

Mn is an element added as a deoxidizing agent, and also expands the austenite single phase temperature range to contributes to improvement of hardenability. If sufficient Mn is not added, two-phase region expands and an alpha phase increases. As a result, Cr carbonitrides also increase, and Cr-deficient layers are formed around them, so that they tend to be starting points for rusting and decrease corrosion resistance. Therefore, the Mn content should be 0.05% or more. From the standpoint of stably obtaining the above effects of Mn, the Mn content preferably have a lower limit of 0.10%. On the other hand, excessive Mn decreases the corrosion resistance, promotes the formation of oxide scales during hardening, and increases the subsequent grinding load, as well as it may increase an amount of residual austenite. Therefore, the Mn content should be 2.50% or less. In view of the deterioration of corrosion resistance due to granules such as MnS, the Mn content is preferably 1.50% or less.

<P: 0.0085 to 0.0400%>

P is an element contained as an impurity in a main raw material such as a molten iron and ferrochromium. P is also an element harmful to the toughness and corrosion resistance of a material after hardening or hardening and tempering. Therefore, the P content should be 0.0400% or less, and preferably 0.0380% or less. On the other hand, the lower limit of the P content is 0.0085%, because excessive reduction causes problems that the use of high-purity raw materials is required, leading to an increase in costs.

<S: 0.0300% or less>

S forms sulfide inclusions and deteriorates general corrosion resistance of steel (general corrosion and pitting corrosion). Moreover, S decreases hot workability and increases susceptibility to edge cracking of a hot rolled sheet. Therefore, the S content should be 0.0300% or less, and preferably 0.0200% or less. The lower limit of the S content is not particularly limited, but a lower S content provides a better the corrosion resistance, while it increases a desulfurization load to increase the production cost. Therefore, the lower limit of the S content is preferably 0.0001%.

<Cr: 13.0 to 18.0%>

Cr is an element for maintaining the corrosion resistance required for the main application of the martensite-based stainless steel material. Therefore, the Cr content should be 13.0% or more. On the other hand, Cr easily forms carbides, and the addition of a large amount of Cr can cause the formation of coarse carbides and increase the amount of residual austenite after hardening or hardening and tempering. Therefore, from the view point of controlling them, the Cr content should be 18.0% or less. From the viewpoint of stably obtaining the above effects of Cr, the Cr content preferably has a lower limit of 13.1% and an upper limit of 17.8%.

<Ni: 0.01 to 1.00%>

As with Mn, Ni is an austenite stabilizing element and also has an effect of improving the toughness after quenching or quenching and tempering. On the other hand, when a large amount of Ni is contained, a press formability of a hot rolled annealed material may be deteriorated due to solid solution strengthening, and an amount of residual austenite may be increased after hardening or hardening and tempering, as well as the production cost increases since Ni is an expensive element. Therefore, the Ni content should be 1.00% or less. On the other hand, Ni is an element effective for suppressing the progression of pitting corrosion, and the Ni content should be 0.01% or more. From the viewpoint of stably obtaining the above effects of Ni, the Mi content preferably has a lower limit of 0.02% and an upper limit of preferably 0.80%, and more preferably 0.50%.

<Mo: 0.01 to 1.00%>

Mo is an element effective for improving the corrosion resistance of the martensite structure containing $\delta$ ferrite. From the viewpoint of obtaining the effect, the Mo content should be 0.01% or more. On the other hand, Mo is an element for stabilizing the ferrite phase, and excessive addition narrows the austenite single phase temperature range, thereby impairing the hardenability. Therefore, the Mo content should be 1.00% or less. From the viewpoint of stably obtaining the above effects of Mo, the Mo content preferably has a lower limit of 0.02% and an upper limit of preferably 0.80%, and more preferably 0.60%.

<Al: 0.100% or less>

In addition to being added as a deoxidizing element, Al is an element that improves oxidation resistance. However, when a large amount of Al is contained, the carbides tend to become large. Al is also a ferrite stabilizing element, which prevents austenitic transformation and increases the Ac1 line. Therefore, the Al content should be 0.100% or less, and preferably 0.050% or less, and more preferably 0.030% or less. On the other hand, the lower limit of the Al content is not particularly limited, but from the viewpoint of obtaining the effects of Al, the lower limit of Al is preferably 0.001%. Here, Al is T. Al.

<N: 0.010 to 0.350%>

As with C, N is an essential element for obtaining a predetermined hardness (Vickers hardness) after quenching or quenching and tempering. Particularly, in an embodiment of this invention, the content of C is reduced, and so it is necessary to contain N in place of C. Further, when N is in solid solution, it also has an effect of improving corrosion resistance. From the viewpoint of obtaining these effects, the N content should be 0.010% or more. However, N may form Cr-based nitrides and cause a Cr depleted layer, and in this case, it may reduce corrosion resistance. On the other hand, excessive addition of N leads to a difficulty to control in the steelmaking stage, so that defects caused by bubbles tend to be formed. When the defects caused by bubbles are formed, they tend to become starting points for rusting, so that they may decrease the corrosion resistance as well as reduce the yield. Therefore, the N content should be 0.350% or less. From the viewpoint of stably obtaining the above effects of N, the lower limit of the N content is preferably 0.015%, and more preferably 0.018%, and the upper limit is preferably 0.300%, and more preferably 0.290%.

<Ca: 0.0001 to 0.0050%>

Ca is added to adjust the composition at the steelmaking stage. In particular, Ca acts as a strong deoxidizing agent and has an effect of promoting deoxidation. However, since Ca is a powerful deoxidizing element, most of it floats to a surface as inclusions in molten steel and a little Ca remains in the steel. However, when a large amount of Ca is added, inclusions generated during the steelmaking contain CaO, which is highly likely to become a starting point for rusting, thereby deteriorating corrosion resistance. Therefore, the Ca content should be 0.0050% or less, and preferably 0.0045% or less, and more preferably 0.0040% or less. On the other hand, since it is impossible to remove even fine inclusions, it is difficult to reduce the Ca content to less than 0.0001% in terms of the production steps. Therefore, the content of Ca should be 0.0001% or more.

<O: 0.001 to 0.010%>

O is an important element, together with Al and Ca, to reduce inclusions. If a large amount of O is added, the number of large inclusions (especially carbides) remaining in the steel increases, which adversely affects corrosion resistance. Therefore, the O content should be 0.010% or less. Further, it is preferable to reduce O as much as possible, but since excessive reduction leads to an increase in cost, the content of O should be 0.001% or more. From the viewpoint of the balance between the cost and the corrosion resistance, the O content preferably has a lower limit of 0.002% and an upper limit of 0.009%.

<2.5C + N: 0.80 to 1.20%>

As described above, C and N are essential elements for obtaining a predetermined hardness (Vickers hardness) after hardening or hardening and tempering. In an embodiment of the invention, N is contained as an alternative to reduce the C content, and C contributes to the hardness at 2.5-fold of N. Therefore, from the viewpoint of obtaining a predetermined hardness, 2.5C + N should be 0.80% or more, and preferably 0.85% or more. Excessively high 2.5C + N may result in excessively high hardness before hardening, which may reduce workability and grinding properties. Therefore, the lower limit of 2.5C + N is preferably less than 1.20% and more preferably 1.10%.

<V: 0.50% or less>

V is an element that forms fine carbonitrides and contributes to improvement of corrosion resistance, and is optionally added. However, excessive addition of V may lead to coarsening of deposits, resulting in a decrease in toughness after hardening or hardening and tempering. Therefore, the V content is 0.50% or less, and preferably 0.30% or less, and more preferably 0.20% or less. Although the lower limit of the content of V is not particularly limited, V may be contaminated in the alloy raw material as an unavoidable impurity and may be difficult to remove it in the refining step. From the viewpoint of obtaining the above effects, the lower limit of the V content is preferably 0.01%, and more preferably 0.02%, and even more preferably 0.03%.

<Nb: 0.50% or less>

Nb is an element that forms carbonitrides and suppresses sensitization and deterioration of corrosion resistance due to deposition of chromium carbonitrides, and is optionally added. However, excessive addition of Nb results in an unstable martensite phase and reduction of hardness. Therefore, the Nb content is 0.50% or less, preferably 0.35% or less, more preferably 0.30% or less, and even more preferably 0.25% or less. Although the lower limit of the Nb content is not particularly limited, it is preferably 0.01%, and more preferably 0.05%, from the viewpoint of obtaining the above effects.

<Ti: 0.30% or less>

Ti is an element that forms carbonitrides and suppresses sensitization and deterioration of corrosion resistance due to deposition of chromium carbonitrides, and is optionally added. However, excessive addition of Ti forms coarse TiN, leading to the generation of hot rolling defects and a decrease in toughness. Therefore, the Ti content should be 0.30% or less, and preferably 0.25% or less. Although the lower limit of the Ti content is not particularly limited, it is preferably 0.01%, more preferably 0.06%, and still more preferably 0.10%, from the viewpoint of obtaining the above effects.

<Cu: 4.0% or less>

Cu is an element that is effective for improving the corrosion resistance of the martensite structure containing $\delta$ ferrite and contributes to improvement of hardenability as an austenite stabilizing element, and is optionally added. However, excessive addition of Cu leads to a decrease in hot workability and an increase in raw material costs. Therefore, the Cu content should be 4.0% or less, and preferably 3.8% or less, and more preferably 3.5% or less. Although the lower limit of the Cu content is not particularly limited, it is preferably 1.0%, and more preferably 1.3%, and still more preferably 1.5%, from the viewpoint of obtaining the above effects.

<Sn: 0.10% or less>

Sn is an element effective for improving corrosion resistance after quenching or quenching and tempering, and is optionally added. However, excessive addition of Sn promotes edge cracking during hot rolling. Therefore, the Sn content should be 0.10% or less, and preferably 0.09% or less. Although the lower limit of the Sn content is not particularly limited, it is preferably 0.002%, and preferably 0.05%, from the viewpoint of obtaining the above effects.

<B: 0.005% or less>

B is an element effective for improving hot workability and is optionally added. However, excessive addition of B may reduce hardenability due to combined deposition of borides and carbides. Therefore, the B content should be 0.005% or less, and preferably 0.0045% or less. Although the lower limit of the content of B is not particularly limited, it is preferably 0.0002% from the viewpoint of obtaining the above effects.

<Co: 0.30% or less>

Co is an element that improves heat resistance and is optionally added. However, since Co is an expensive element, an excessive Co content leads to an increase in production costs. Therefore, the Co content is 0.30% or less, and preferably 0.10% or less, and more preferably 0.05% or less. Although the lower limit of the Co content is not particularly limited, it may preferably be 0.01% from the viewpoint of obtaining the above effects.

The martensitic stainless steel material according to an embodiment of this invention has an average grain diameter of carbides of 0.50 $\mu$m or less, and preferably 0.48 $\mu$m or less. By controlling the average grain diameter of the carbides to such a range, the workability of the martensitic stainless steel material is improved, and the generation of irregular patterns is also suppressed. Although the lower limit of the average grain diameter of the carbides is not particularly limited, it is preferably 0.01 $\mu$m, and more preferably 0.05 $\mu$m, and still more preferably 0.10 $\mu$m.

Here, the carbides for which the average grain diameter is defined include both eutectic carbides generated during casting and deposited carbides generated during the rolling step.

Further, the average grain diameter of the carbides can be calculated by observing cross sections of the martensite-based stainless steel material with an SEM, measuring a circle equivalent diameter of each carbide in the observation fields, and calculating the average value.

In the martensitic stainless steel material according to an embodiment of this invention, the number of carbides having a size of 10 $\mu$m or more is 0.10 carbides/cm$^2$ or less, and preferably 0.05 carbides/cm$^2$ or less. Since the carbides having a size of 10 $\mu$m or more tend to form starting points for rusting, the control of the number of the carbides having a size of 10 $\mu$m or more to such a range can lead to suppression of rusting, thereby improving corrosion resistance. Also, since carbides having a size of 10 $\mu$m or more may cause irregular patterns, the generation of irregular patterns can be suppressed by controlling the number of these carbides. Although the number of the carbides having a size of 10 $\mu$m or more is preferably as low as possible, the number is not particularly limited, but it may generally be 0.01 carbides/cm$^2$ or more.

Here, the carbides having a size of 10 $\mu$m or more for which the number is defined are mainly targeted to eutectic carbides generated during casting. Further, the size of the carbide refers to (long diameter + short diameter) / 2 of the carbide.

The number of the carbides having a size of 10 $\mu$m or more is calculated by observing cross sections of the martensitic stainless steel material with an optical microscope to determine the number of the carbides having a size of 10 $\mu$m or more, and dividing the number by the area of the measurement region.

The martensitic stainless steel material according to an embodiment of this invention has a Vickers hardness of 320 HV or more, preferably 300 HV or less, and more preferably 290 HV or less, after hardening or hardening and tempering. If the Vickers hardness is in this range, the material is soft, and thus workability by forging, grinding and the like can be improved. The lower limit of the Vickers hardness is not particularly limited, but it may be 150 HV, and preferably 200 HV.

As used herein, the Vickers hardness means a value measured at room temperature (25°C) using a Vickers hardness tester.

The martensitic stainless steel material according to an embodiment of this invention has an amount of residual austenite of 10.0% by volume or less, preferably 8.0% by volume or less, and more preferably 5.0% by volume or less, after hardening or hardening and tempering. The residual austenite is generated when austenite formed during hardening remains without martensitic transformation during subsequent treatments (e.g., a subzero treatment, a tempering treatment). The residual austenite is particularly prone to be generated in regions where carbon, a strong austenite stabilizing element, is segregated. The residual austenite is softer than martensite, and its presence in a large amount does not provide the desired hardness.

Since carbon segregation is generated mainly as central segregation during casting, a large amount of residual austenite is often formed in in the center of the thickness direction of the martensitic stainless steel material. Since the center of the martensitic stainless steel material in the thickness direction becomes a cutting edge during formation of a cutting article, the presence of soft residual austenite at the cutting edge may cause chipping or deteriorate the sharpness of the cutting article.

The amount of the residual austenite can be determined as follows: First, a cross section of the martensitic stainless steel material is observed by EBSD to distinguish the phases of BCC and FCC crystalline structures and to determine their areas. Subsequently, based on these areas, a ratio of the area of the phase of the FCC crystalline structure to the sum of the areas of the phases of the BCC and FCC crystalline structures (i.e., an area ratio of the phase of the FCC crystalline structure) is calculated. The area ratio of the phase of the FCC crystalline structure thus calculated is regarded as the amount of residual austenite (% by volume).

In the central segregation part of carbon as described above, coarse carbides tend to be formed in rows, which will cause irregular patterns (streaky patterns and island-shaped patterns), so that reducing the central segregation is also effective in reducing these irregular patterns.

The martensitic stainless steel material according to an embodiment of this invention has [C] + 0.3[N] of 0.15% or more, in which [C} is an amount of solid solution of C and [N] is an amount of solid solution of N, after hardening or hardening and tempering. In particular, when the martensitic stainless steel material is used for a cutting article, it is preferable that [C] + 0.3[N] is 0.20% or more. Such a range of [C] + 0.3[N] can ensure strength for use in the cutting article. Although the upper limit of [C] + 0.3[N] is not particularly limited, it is preferably 1.00%, and more preferably 0.80%.

The amounts of solid solution of C and N ([C] and [N]) can be measured by the following electrolytic extraction residue method.

A test piece having a size of about 20 mm square is cut from the center in the width direction of the martensitic stainless steel material, and the entire surface of the test piece, which corresponds to the surface of the martensitic stainless steel material, is wet-polished with #600 waterproof abrasive paper. After polishing, the test piece base material (stainless steel base material) is dissolved by electrolysis at a constant potential of -100 mV in a methanol solution containing 10% maleic anhydride and 2% tetramethylammonium chloride. After electrolysis, the residues (deposits) remaining in the solution without dissolving are captured using a 200 nm mesh filter. The captured deposits are washed and dried with deionized water. After dissolving the deposits with aqua regalis and perchloric acid, the mass of C in the deposits is determined by elemental analysis using ICP optical emission spectrometry in accordance with JIS G1258: 2014. The resulting mass is divided by an amount of change of the mass of the test piece due to electrolysis ("mass of test piece before electrolysis" - "mass of test piece after electrolysis") and expressed as a percentage, which is determined to be an "amount of deposition $C_p$" (%). Based on the difference between the amount of deposition and the amount of alloy ($C_0$), the amount of solid solution [C] (= $C_0$ - $C_p$) in the steel can be measured. The solid solution [N] can be determined by the same method.

The martensitic stainless steel material according to an embodiment of this invention has a Vickers hardness of 500 HV or more after hardening or hardening and tempering. In particular, when the martensitic stainless steel material is used for cutting articles, it is more preferable that the Vickers hardness is 550 HV or more. The Vickers hardness in this range can ensure strength for use in cutting tools. Although the upper limit of the hardness is not particularly limited, it is preferably 900 HV, and more preferably 800 HV.

Here, hardening is performed at 1000 to 1200°C. Tempering is performed at 100 to 400°C. A subzero treatment is preferably performed at -200 to -50°C after the hardening.

Although the martensitic stainless steel material according to an embodiment of this invention is not particularly limited, it is preferably a hot rolled sheet, a hot rolled annealed sheet, a cold rolled sheet, or a cold rolled annealed sheet.

The martensitic stainless steel material according to an embodiment of this invention can be produced by using a slab having the same composition as that of the martensitic stainless steel material as described above, and by a method including a breakdown rolling step, a hot rolling step, and a softening step.

In the breakdown rolling step, the slab is subjected to a heat treatment at a temperature of 1000°C or higher and lower than 1200°C for 1 to 10 hours, and then rough-rolling it under conditions of the total reduction in thickness of 30% to 70% and including at least two passes with a reduction in thickness of 10% or more per pass to obtain a breakdown material. The upper limit of the temperature at the heat treatment is preferably 1180°C or lower, more preferably 1160°C or lower, and even more preferably 1150°C or lower.

By carrying out the breakdown rolling step under such conditions, the following effects can be obtained. First, during the heat treatment at high temperature (maintaining) of the slab, the eutectic carbides formed during casting can be brought into solution. The rough rolling also reduces the width of macro-segregation and promotes carbon diffusion by introducing dislocations that extend to the center of the breakdown material, thereby eliminating the carbon segregation generated during casting. In addition, the formation of residual austenite caused by a decrease in the Ms point due to carbon segregation can be suppressed. As a result, it is possible to control the average grain size of carbides, the number of carbides having a size of 10 μm or more, and the amount of residual austenite after hardening or hardening and tempering to the above ranges. These effects are effectively achieved when combined with the following hot rolling step and, if necessary, a soaking step.

If the heat treatment time of the breakdown rolling step is less than 1 hour or the temperature at the heat treatment is lower than 1000°C, the effects of bringing the eutectic carbides into solution and reducing carbon segregation are not sufficiently obtained. If the heat treatment time of the breakdown rolling step exceeds 10 hours or the temperature at the heat treatment exceeds 1200°C, the slab's own weight causes drooping deformation, making it difficult to implement subsequent steps.

If the total reduction in thickness of the breakdown rolling step is less than 30%, the introduction of dislocations is insufficient and the range of macro-segregation is difficult to be reduced, so that the effects of bringing the eutectic carbides into solution and reducing the carbon segregation are not sufficiently achieved. If the total reduction in thickness of the breakdown rolling step exceeds 70%, the reduction in thickness of the subsequent hot rolling step will be insufficient. Furthermore, during the breakdown process, two passes with a reduction in thickness of 10% or more are required because if the reduction in thickness for each pass is lower, the strain does not reach the central portion of the sheet, so that the effect of eliminating macro-segregation will be weakened.

The number of passes in the breakdown rolling step is not particularly limited as long as it is two or more, but it may preferably be two to nine, and more preferably two to six. The positions of the passes with a reduction in thickness of 10% or more are not limited, but it is preferable that the reduction in thickness of the final pass and the pass before it be 10% or more.

In the hot rolling step, the breakdown material is subjected to a heat treatment at a temperature of 1000°C or higher and lower than 1200°C for 1 to 5 hours, and then hot-rolling it to obtain a hot rolled material.

By performing the heat treatment under such conditions, the eutectic carbides generated during casting can be completely brought into solution, so that the average grain diameter of the carbides, the number of the carbides having a size of 10 μm or more and the amount of residual austenite after hardening or hardening and tempering can be controlled to the above ranges.

The hot rolling conditions are not particularly limited, but it is preferable to finish the sheet to a thickness of 2 to 8 mm.

If the heat treatment time of the hot rolling step is less than 1 hour or the temperature at the heat treatment is lower than 1000°C, the effects of bringing the eutectic carbides into solution and reducing the carbon segregation are not sufficiently obtained. If the heat treatment time of the hot rolling step exceeds 5 hours or the temperature at the heat treatment exceeds 1200°C, the own weight of the breakdown material causes drooping deformation, making it difficult to implement subsequent steps. From the viewpoint of stably ensuring the above effects, the heat treatment time of the heat rolling step is more preferably 1.5 to 3 hours.

The softening step is to wind the hot rolled material at a winding temperature of 800°C to 900°C, and then heat it at a temperature of Ac1 to (Ac1 point - 50°C) for 1 to 5 hours.

By carrying out the softening step, it is possible to obtain a softened material (martensitic stainless steel material) that has a Vickers hardness of 320 HV or less before hardening or hardening and tempering and that is soft and highly workable. Further, since the coarsening of the carbides at the segregation portions can be suppressed by performing the heating under such conditions, it is possible to stably control the average grain diameter of the carbides and the number of the carbides having a size of 10 μm or more to the above ranges.

The heating is performed by maintaining the coiled-like hot rolled sheet in a heated state at a temperature of Ac1 point to (Ac1 point - 50°C). Therefore, it should be noted that the heating is not performed by reheating the coil-like hot rolled sheet to that temperature after once cooling it. Also, the heating is performed in a batch annealing furnace.

Here, the Ac1 point is calculated by the following equation (1):

$$Ac1 = -250C + 73Si - 66Mn - 115Ni + 35Cr + 60Mo - 18Cu$$
$$+ 620Ti + 750Al - 280N + 410 \quad (1)$$

In the equation, the symbol of each element is % by mass of each element.

The softened material obtained in the softening step may be optionally washed with an acid.

Between the breakdown rolling step and the hot rolling step, a soaking step may optionally be performed.

The soaking step is to maintain the breakdown material at a temperature 1000°C or higher and less than 1200°C for 1 to 24 hours.

By performing the soaking step under such conditions, it is possible to enhance the effects of bringing the eutectic carbides into solution and reducing the carbon segregation.

If the heat treatment time of the soaking step is less than 1 hour or the temperature at the heat treatment is lower than 1000°C, the effects of bringing the eutectic carbides into solution and reducing the carbon segregation cannot be fully obtained. If the heat treatment time of the soaking step exceeds 24 hours or the temperature at the heat treatment exceeds 1200°C, the own weight of the breakdown material causes drooping deformation, making it difficult to implement subsequent steps. From the viewpoint of stably ensuring the above effects, the heat treatment time of the soaking step is preferably 3 to 20 hours, and more preferably 3 to 15 hours.

After the softening step, a cold rolling step and an annealing step may optionally be performed.

The cold rolling step is to cold-roll the softened material obtained in the softening step to obtain a cold rolled material.

The cold rolled material can be obtained by performing the cold rolling step.

The conditions for the cold rolling are not particularly limited, but they may be appropriately adjusted according to required cold rolled materials.

The annealing step is to heat the cold rolled material in a temperature range from 100°C to Ac1 point to (Ac1 point - 50°C) at a heating rate of 50°C/s or more. The heating rate is preferably 100°C/s or more.

The annealing step can provide a hot rolled annealed material. It should be noted that the annealing of the cold rolled material is started at temperatures of 25 to 100°C. The temperature from the Ac1 point to (Ac1 point - 50°C) is the annealing temperature of the annealing step, and the heating rate can be determined by dividing a value obtained by subtracting 100 from the annealing temperature (annealing temperature - 100[°C]) by a time[s] from 100°C to the annealing temperature.

Since the coarsening of the carbides is suppressed by performing the annealing step under the above conditions, it is possible to stably control the average grain diameter of the carbides and the number of the carbides having a size of 10 μm or more to the above ranges. Further, since the material becomes soft due to restore of strain caused by the cold rolling and fine deposition of carbides, it is possible to have a cold rolled annealed material (martensitic stainless steel material) that is soft and highly workable, with a Vickers hardness of 320 HV or less before hardening or hardening and tempering.

The martensitic stainless steel material according to an embodiment of this invention produced as described above controls, in addition to the steel composition, the average grain size of the carbides, the number of carbides having a size of 10 μm or more, the Vickers hardness before hardening or hardening and tempering, the amount of residual austenite after hardening or hardening and tempering, and the amount of solid solution of C and N after hardening or hardening and tempering, so that the martensitic stainless steel material is soft and has good workability before hardening or hardening and tempering, and has high hardness and corrosion resistance after hardening or hardening and tempering, and can suppress the generation of irregular patterns.

The method for producing a cutting article according to an embodiment of this invention includes a hardening step of processing the martensitic stainless steel described above, then heating the material at a temperature of 1000°C to 1200°C for 5 to 60 minutes and cooling it at a cooling rate of 3°C/s or more. The cooling rate is preferably 10°C/s or more, and more preferably 20°C/s or more.

By performing the hardening step under the above conditions, deposits such as carbides and nitrides are sufficiently dissolved, and the amounts of solid solution of C and solid solution of N increase to obtain high hardness. By controlling the cooling rate to the above range, the redeposition of Cr carbonitride during the hardening step can be suppressed and sensitization can be suppressed to obtain high corrosion resistance.

The method for processing the martensitic stainless steel material is not particularly limited, and known methods such as forging and grinding can be used.

After the hardening step, a tempering step or a subzero treatment step can optionally be performed. The conditions for the tempering and subzero treatment steps are not limited, but the tempering step is preferably performed at a temperature of 100 to 400°C and the subzero treatment step at -200 to -50°C.

The cutting article produced by the above production method is easily machined, has high hardness and corrosion resistance, has good sharpness, and can suppress generation of irregular patterns.

[EXAMPLES]

The content of the present invention will be described below in detail with reference to Examples, but the present invention is not construed as being limited thereto.

Steel having the compositions shown in Table 1 was smelted and cast into slabs each having a thickness of 200 mm. The slabs were sequentially subjected to the breakdown rolling step, hot rolling step, softening step, cold rolling step, and annealing step. The conditions for the breakdown rolling step, hot rolling step, softening step and annealing step are shown in Tables 2 and 3. For some of Examples (Examples 21 and 22), the soaking step was performed between the breakdown rolling step and the hot rolling step.

In the hot rolling step, the final product was a hot rolled sheet having a thickness of 3 mm.

In the softening step, each hot rolled sheet obtained in the hot rolling step was wound at a winding temperature of 850°C, and the wound hot rolled sheet was then transferred to a batch annealing furnace and subjected to the softening step under the conditions shown in Tables 2 and 3.

In the cold rolling step, the softened sheet obtained in the softening step was cold-rolled into a thickness of 2.0 mm.

After the annealing step, the sheet was washed with an acid.

The cold rolled annealed sheets (martensitic stainless steel materials) obtained above were evaluated as follows:

[Table 1]

| Steel Nos. | Steel Composition (mass %) | | | | | | | | | | | | |
|---|---|---|---|---|---|---|---|---|---|---|---|---|---|
| | C | Si | Mn | P | S | Cr | Ni | Mo | Al | N | Ca | O | Others |
| A1 | 0.449 | 0.71 | 0.80 | 0.0156 | 0.0004 | 16.8 | 0.22 | 0.51 | 0.011 | 0.062 | 0.0004 | 0.005 | -- |
| A2 | 0.311 | 0.78 | 0.27 | 0.0180 | 0.0026 | 17.3 | 0.28 | 0.51 | 0.039 | 0.036 | 0.0001 | 0.004 | -- |
| A3 | 0.444 | 0.88 | 0.71 | 0.0159 | 0.0031 | 14.2 | 0.21 | 0.51 | 0.004 | 0.035 | 0.0005 | 0.006 | -- |
| A4 | 0.419 | 0.11 | 0.35 | 0.0189 | 0.0019 | 15.5 | 0.41 | 0.43 | 0.018 | 0.051 | 0.0003 | 0.005 | Ti:0.21 |
| A5 | 0.412 | 0.35 | 2.31 | 0.0187 | 0.0007 | 14.7 | 0.51 | 0.49 | 0.032 | 0.015 | 0.0003 | 0.002 | -- |
| A6 | 0.363 | 0.81 | 0.08 | 0.0165 | 0.0024 | 17.0 | 0.51 | 0.42 | 0.044 | 0.016 | 0.0004 | 0.004 | Cu:1.9 |
| A7 | 0.356 | 0.47 | 0.77 | 0.0330 | 0.0029 | 15.6 | 0.45 | 0.52 | 0.032 | 0.062 | 0.0004 | 0.005 | -- |
| A8 | 0.367 | 0.27 | 0.43 | 0.0162 | 0.0260 | 15.0 | 0.28 | 0.47 | 0.035 | 0.029 | 0.0004 | 0.005 | -- |
| A9 | 0.434 | 0.29 | 0.69 | 0.0243 | 0.0004 | 17.5 | 0.33 | 0.42 | 0.035 | 0.056 | 0.0001 | 0.001 | -- |
| A10 | 0.407 | 0.24 | 0.41 | 0.0188 | 0.0005 | 13.3 | 0.32 | 0.49 | 0.002 | 0.041 | 0.0003 | 0.003 | Sn:0.08 |
| A11 | 0.395 | 0.35 | 0.55 | 0.0174 | 0.0024 | 17.0 | 0.87 | 0.41 | 0.014 | 0.028 | 0.0003 | 0.002 | -- |
| A12 | 0.380 | 0.67 | 0.39 | 0.0142 | 0.0019 | 15.8 | 0.03 | 0.52 | 0.021 | 0.014 | 0.0004 | 0.008 | -- |
| A13 | 0.418 | 0.50 | 0.43 | 0.0174 | 0.0010 | 16.4 | 0.36 | 0.93 | 0.042 | 0.034 | 0.0002 | 0.009 | B:0.002 |
| A14 | 0.363 | 0.51 | 0.73 | 0.0249 | 0.0027 | 16.5 | 0.41 | 0.53 | 0.049 | 0.327 | 0.0006 | 0.004 | -- |
| A15 | 0.356 | 0.47 | 0.81 | 0.0167 | 0.0015 | 15.6 | 0.26 | 0.39 | 0.030 | 0.014 | 0.0004 | 0.006 | -- |
| A16 | 0.540 | 0.49 | 0.30 | 0.0175 | 0.0025 | 17.1 | 0.22 | 0.53 | 0.034 | 0.025 | 0.0005 | 0.006 | -- |
| A17 | 0.368 | 0.59 | 0.41 | 0.0145 | 0.0023 | 17.1 | 0.29 | 0.52 | 0.024 | 0.145 | 0.0004 | 0.007 | Co.0.22 |
| A18 | 0.420 | 0.50 | 0.37 | 0.0120 | 0.0004 | 14.8 | 0.06 | 0.60 | 0.007 | 0.019 | 0.0004 | 0.003 | V:0.12 |
| A19 | 0.360 | 0.50 | 0.40 | 0.0100 | 0.0003 | 14.4 | 0.05 | 0.59 | 0.008 | 0.052 | 0.0038 | 0.004 | Nb:0.10 |
| A20 | 0.380 | 0.41 | 0.33 | 0.0100 | 0.0020 | 16.1 | 0.40 | 0.54 | 0.004 | 0.043 | 0.0020 | 0.003 | Cu:1.5, Nb:0.35 B:0.003, Co:0.04 |
| B1 | 0.701 | 0.79 | 0.32 | 0.0155 | 0.0007 | 15.0 | 0.43 | 0.46 | 0.011 | 0.014 | 0.0002 | 0.009 | -- |
| B2 | 0.240 | 0.65 | 0.60 | 0.0180 | 0.0014 | 15.5 | 0.44 | 0.49 | 0.023 | 0.019 | 0.0004 | 0.008 | -- |
| B3 | 0.372 | 1.22 | 0.83 | 0.0159 | 0.0018 | 15.4 | 0.44 | 0.39 | 0.020 | 0.020 | 0.0005 | 0.004 | -- |
| B4 | 0.394 | 0.28 | 2.88 | 0.0152 | 0.0012 | 15.4 | 0.50 | 0.47 | 0.044 | 0.033 | 0.0006 | 0.002 | -- |
| B5 | 0.422 | 0.74 | 0.71 | 0.0176 | 0.0004 | 19.2 | 0.25 | 0.47 | 0.003 | 0.030 | 0.0005 | 0.009 | -- |
| B6 | 0.419 | 0.31 | 0.44 | 0.0164 | 0.0020 | 11.9 | 0.42 | 0.50 | 0.025 | 0.025 | 0.0006 | 0.006 | -- |
| B7 | 0.448 | 0.84 | 0.61 | 0.0186 | 0.0013 | 15.5 | 1.22 | 0.39 | 0.015 | 0.023 | 0.0004 | 0.009 | -- |
| B8 | 0.371 | 0.51 | 0.79 | 0.0178 | 0.0024 | 15.6 | 0.27 | 1.39 | 0.012 | 0.013 | 0.0003 | 0.008 | -- |
| B9 | 0.406 | 0.60 | 0.21 | 0.0164 | 0.0016 | 14.9 | 0.31 | 0.37 | 0.130 | 0.020 | 0.0002 | 0.010 | -- |
| B10 | 0.382 | 0.83 | 0.33 | 0.0185 | 0.0010 | 15.0 | 0.30 | 0.46 | 0.042 | 0.005 | 0.0001 | 0.001 | -- |
| B11 | 0.408 | 0.37 | 0.52 | 0.0176 | 0.0025 | 14.1 | 0.47 | 0.40 | 0.024 | 0.011 | 0.0065 | 0.006 | -- |
| B12 | 0.415 | 0.55 | 0.69 | 0.0163 | 0.0011 | 15.5 | 0.24 | 0.45 | 0.004 | 0.026 | 0.0001 | 0.020 | -- |
| B13 | 0.432 | 0.18 | 0.34 | 0.0153 | 0.0015 | 13.9 | 0.48 | 0.41 | 0.000 | 0.036 | 0.0003 | 0.005 | -- |

The balance is Fe and impurities. The underlines indicate that the contens are outside the scope of the present invention.

[Table 21]

| | Steel Nos. | Ac1 Point (°C) | Ac1 Point -50 (°C) | Breakdown Rolling Step | | | | | | | | Soaking Step | | Hot Rolling Step | | Softening Step | | Annealing Step | | Hardening Step | | |
| --- | --- | --- | --- | --- | --- | --- | --- | --- | --- | --- | --- | --- | --- | --- | --- | --- | --- | --- | --- | --- | --- | --- |
| | | | | Temp. (°C) | Time (h) | Total Reduction (%) | 1st Pass (%) | 2nd Pass (%) | 3th Pass (%) | 4th Pass (%) | 5th Pass (%) | Temp. (°C) | Time (h) | Temp. (°C) | Time (h) | Temp. (°C) | Time (h) | Temp. (°C) | Heating Rate (°C/s) | Temp. (°C) | Time (min) | Cooling Rate (°C/s) |
| Ex. 1 | A1 | 879 | 829 | 1150 | 5 | 40 | 8 | 10 | 9 | 11 | 10 | -- | -- | 1180 | 1 | 850 | 4 | 850 | 150 | 1150 | 20 | 30 |
| Ex. 2 | A2 | 993 | 943 | 1050 | 2 | 40 | 8 | 10 | 9 | 11 | 10 | -- | -- | 1150 | 1 | 950 | 4 | 950 | 150 | 1050 | 10 | 30 |
| Ex. 3 | A3 | 814 | 764 | 1050 | 2 | 40 | 8 | 10 | 9 | 11 | 10 | -- | -- | 1150 | 1 | 800 | 2 | 800 | 150 | 1100 | 10 | 5 |
| Ex. 4 | A4 | 810 | 760 | 1050 | 2 | 35 | 5 | 6 | 5 | 13 | 11 | -- | -- | 1150 | 1 | 800 | 2 | 800 | 150 | 1100 | 10 | 5 |
| Ex. 5 | A5 | 687 | 637 | 1050 | 2 | 35 | 5 | 6 | 5 | 13 | 11 | -- | -- | 1150 | 1 | 650 | 2 | 650 | 150 | 1100 | 10 | 30 |
| Ex. 6 | A6 | 963 | 913 | 1050 | 2 | 40 | 8 | 10 | 9 | 11 | 10 | -- | -- | 1150 | 1 | 950 | 2 | 950 | 150 | 1100 | 10 | 30 |
| Ex. 7 | A7 | 837 | 787 | 1050 | 2 | 35 | 5 | 6 | 5 | 13 | 11 | -- | -- | 1150 | 1 | 800 | 2 | 800 | 150 | 1100 | 10 | 30 |
| Ex. 8 | A8 | 847 | 797 | 1050 | 2 | 35 | 5 | 6 | 5 | 13 | 11 | -- | -- | 1150 | 1 | 820 | 1 | 820 | 150 | 1100 | 10 | 30 |
| Ex. 9 | A9 | 887 | 837 | 1050 | 2 | 40 | 8 | 10 | 9 | 11 | 10 | -- | -- | 1150 | 1 | 850 | 3 | 850 | 150 | 1100 | 10 | 30 |
| Ex. 10 | A10 | 746 | 696 | 1050 | 2 | 35 | 5 | 6 | 5 | 13 | 11 | | | 1150 | 1 | 720 | 2 | 720 | 150 | 1100 | 10 | 30 |
| Ex. 11 | A11 | 824 | 774 | 1050 | 2 | 35 | 5 | 6 | 5 | 13 | 11 | -- | -- | 1150 | 1 | 800 | 2 | 800 | 150 | 1100 | 10 | 30 |
| Ex. 12 | A12 | 930 | 880 | 1050 | 2 | 35 | 5 | 6 | 5 | 13 | 11 | -- | -- | 1150 | 1 | 900 | 2 | 900 | 150 | 1100 | 10 | 30 |
| Ex. 13 | A13 | 923 | 873 | 1050 | 2 | 35 | 5 | 6 | 5 | 13 | 11 | -- | -- | 1130 | 1 | 900 | 3 | 900 | 150 | 1100 | 10 | 30 |
| Ex. 14 | A14 | 817 | 767 | 1050 | 2 | 35 | 5 | 6 | 5 | 13 | 11 | -- | -- | 1130 | 1 | 800 | 2 | 800 | 150 | 1100 | 10 | 30 |
| Ex. 15 | A15 | 859 | 809 | 1050 | 2 | 35 | 5 | 6 | 5 | 13 | 11 | -- | -- | 1150 | 1 | 820 | 2 | 820 | 150 | 1100 | 10 | 30 |
| Ex. 16 | A16 | 916 | 866 | 1050 | 2 | 35 | 5 | 6 | 5 | 13 | 11 | -- | -- | 1150 | 1 | 880 | 2 | 880 | 150 | 1100 | 10 | 30 |
| Ex. 17 | A17 | 907 | 857 | 1050 | 2 | 35 | 5 | 6 | 5 | 13 | 11 | -- | -- | 1150 | 1 | 880 | 2 | 880 | 150 | 1100 | 10 | 30 |
| Ex. 18 | A18 | 864 | 814 | 1050 | 2 | 35 | 5 | 6 | 5 | 13 | 11 | -- | -- | 1150 | 1 | 820 | 4 | 820 | 150 | 1100 | 10 | 10 |
| Ex. 19 | A19 | 857 | 807 | 1050 | 2 | 35 | 5 | 6 | 5 | 13 | 11 | -- | -- | 1150 | 1 | 820 | 4 | 820 | 150 | 1100 | 10 | 10 |
| Ex. 20 | A20 | 865 | 815 | 1050 | 2 | 35 | 5 | 6 | 5 | 13 | 11 | | | 1150 | 1 | 840 | 4 | 840 | 150 | 1100 | 10 | 10 |
| Ex. 21 | A18 | 864 | 814 | 1050 | 2 | 35 | 5 | 6 | 5 | 13 | 11 | 1100 | 10 | 1150 | 1 | 820 | 4 | 820 | 150 | 1100 | 10 | 30 |
| Ex. 22 | A19 | 857 | 807 | 1050 | 2 | 35 | 5 | 6 | 5 | 13 | 11 | 1150 | 20 | 1150 | 1 | 820 | 4 | 820 | 150 | 1100 | 10 | 30 |

The underlines indicate that the contents are outside the scope of the present invention.

13

[Table 3]

EP 4 675 002 A1

14

| Steel Nos. | Ac1 Point (°C) | Ac1 Point -50 (°C) | Breakdown Rolling Step | | | | | | | | Soaking Step | | Hot Rolling Step | | Softening Step | | Annealing Step | | Hardening Step | | |
|---|---|---|---|---|---|---|---|---|---|---|---|---|---|---|---|---|---|---|---|---|---|
| | | | Temp. (°C) | Time (h) | Total Reduction (%) | 1st Pass (%) | 2nd Pass (%) | 3th Pass (%) | 4th Pass (%) | 5th Pass (%) | Temp. (°C) | Time (h) | Temp. (°C) | Time (h) | Temp. (°C) | Time (h) | Temp. (°C) | Heating Rate (°C/s) | Temp. (°C) | Time (min) | Cooling Rate (°C/s) |
| Comp. 1 | B1 | 777 | 727 | 1150 | 2 | 40 | 8 | 10 | 9 | 11 | 10 | -- | -- | 1180 | 1 | 750 | 2 | 750 | 150 | 1150 | 20 | 30 |
| Comp. 2 | B2 | 881 | 831 | 1050 | 2 | 35 | 5 | 6 | 5 | 13 | 11 | -- | -- | 1110 | 1 | 850 | 3 | 850 | 150 | 1050 | 10 | 30 |
| Comp. 3 | B3 | 871 | 821 | 1050 | 2 | 35 | 5 | 6 | 5 | 13 | 11 | -- | -- | 1150 | 1 | 850 | 2 | 850 | 150 | 1100 | 10 | 30 |
| Comp. 4 | B4 | 677 | 627 | 1050 | 2 | 35 | 5 | 6 | 5 | 13 | 11 | -- | -- | 1150 | 1 | 650 | 2 | 650 | 150 | 1100 | 10 | 30 |
| Comp. 5 | B5 | 977 | 927 | 1050 | 2 | 35 | 5 | 6 | 5 | 13 | 11 | -- | -- | 1150 | 1 | 950 | 2 | 950 | 150 | 1100 | 10 | 30 |
| Comp. 6 | B6 | 709 | 659 | 1050 | 2 | 40 | 8 | 10 | 9 | 11 | 10 | -- | -- | 1150 | 1 | 680 | 3 | 680 | 150 | 1100 | 10 | 30 |
| Comp. 7 | D7 | 748 | 698 | 1050 | 2 | 35 | 5 | 6 | 5 | 13 | 11 | -- | -- | 1150 | 1 | 720 | 2 | 720 | 150 | 1100 | 10 | 30 |
| Comp. 8 | B8 | 907 | 857 | 1050 | 2 | 35 | 5 | 6 | 5 | 13 | 11 | -- | -- | 1150 | 1 | 880 | 2 | 880 | 150 | 1100 | 10 | 30 |
| Comp. 9 | B9 | 939 | 889 | 1050 | 2 | 35 | 5 | 6 | 5 | 13 | 11 | -- | -- | 1150 | 1 | 900 | 3 | 900 | 150 | 1100 | 10 | 30 |
| Comp. 10 | B10 | 902 | 852 | 1050 | 2 | 35 | 5 | 6 | 5 | 13 | 11 | -- | -- | 1150 | 1 | 880 | 2 | 880 | 150 | 1100 | 10 | 30 |
| Comp. 11 | B11 | 779 | 729 | 1050 | 2 | 35 | 5 | 6 | 5 | 13 | 11 | -- | -- | 1150 | 1 | 770 | 2 | 770 | 150 | 1100 | 10 | 30 |
| Comp. 12 | B12 | 839 | 789 | 1050 | 2 | 35 | 5 | 6 | 5 | 13 | 11 | -- | -- | 1150 | 1 | 800 | 4 | 800 | 150 | 1100 | 10 | 30 |
| Comp. 13 | A19 | 857 | 807 | 1050 | 2 | 35 | 6 | 6 | 6 | 7 | 14 | -- | -- | 1150 | 1 | 820 | 4 | 820 | 150 | 1100 | 10 | 30 |
| Comp. 14 | A19 | 857 | 807 | -- | -- | -- | -- | -- | -- | -- | -- | -- | -- | 1150 | 1 | 820 | 4 | 820 | 150 | 1100 | 10 | 30 |
| Comp. 15 | A19 | 857 | 807 | 1050 | 2 | 35 | 5 | 6 | 5 | 13 | 11 | -- | -- | 1150 | 1 | -- | -- | 820 | 150 | 1100 | 10 | 30 |
| Comp. 16 | A19 | 857 | 807 | 1050 | 2 | 35 | 5 | 6 | 5 | 13 | 11 | | | 1150 | 1 | 820 | 0.5 | 820 | 150 | 1100 | 10 | 30 |
| Comp. 17 | B13 | 739 | 689 | 1050 | 2 | 35 | 5 | 6 | 5 | 13 | 11 | -- | -- | 1150 | 1 | 720 | 2 | 720 | 150 | 1100 | 10 | 30 |

The underlines indicate that the contents are outside the scope of the present invention.

(Amount of Solid Solution[C] + 0.3[N])

The resulting cold rolled annealed sheets were hardened under the conditions shown in Tables 2 and 3, subzero-treated at -70°C, and tempered at 200°C, and the amounts of solid solution of C and N were then measured by the electrolytic extraction residue method and[C] + 0.3[N] was calculated.

The measurement of the amounts of solid solution of C and N was performed according to the method described above.

(Vickers Hardness)

The Vickers hardness (Vickers hardness before hardening or hardening and tempering) of the resulting cold rolled tempered sheet was measured with a Vickers hardness tester. The measurement temperature was room temperature (25°C). The Vickers hardness of 320 HV or less was considered to be acceptable.

The resulting cold rolled annealed sheets were hardened under the conditions shown in Tables 2 and 3, subzero-treated at -70°C, and tempered at 200°C, and the surfaces were then polished with #80, and the JIS surface hardness (Vickers hardness after hardening or hardening and tempering) was measured with a Vickers hardness tester. The measurement temperature was room temperature (25°C). The Vickers hardness of 500 HV or more was considered to be acceptable.

(Corrosion Resistance)

The resulting cold rolled annealed sheets were hardened under the conditions shown in Tables 2 and 3, subzero-treated at -70°C, and tempered at 200°C, and the surfaces were then polished with #600 and subjected to the JIS Z2371: 2015 "salt spray testing". In the evaluation, a rust area percentage of less than 10% was determined to be acceptable (circle), and a rust area percentage of 10% or more was determined to be fail (x). Among the sheets having a rust area ratio of less than 10%, those having a rust area ratio of 0% were determined to particularly excellent (double circle).

(Average Grain Diameter of Carbides)

Cross sections parallel to a rolling direction and a sheet thickness direction of each of the resulting cold rolled annealed sheets were observed with SEM, and among carbides observed in the observation fields, all carbide grains except for carbide grains having a circle equivalent diameter of less than 0.10 $\mu$m and carbide grains partially protruding from the observation field were used as the measurement subjects to measure the circle equivalent diameter ($\mu$m), and a value obtained by dividing the sum of equivalent circle diameters of the carbide grains as the measurement subjects by the total number of the carbide grains as the measurement subjects was determined to be the average grain diameter ($\mu$m) of the carbides. However, the total number of the carbide grains as the measurement subjects was set to 100 or more by randomly selecting a plurality of non-overlapping observation fields. The circle equivalent diameter of the carbide grains was calculated from areas of the carbide grains obtained by processing the SEM images with image processing software.

(Number of Carbides Having Size of 10 $\mu$m or more)

For each of the cross sections parallel to the rolling direction and the sheet thickness direction of the resulting cold rolled annealed sheets, 20 areas each having 50 mm $\times$ 50 mm were visually observed using an optical microscope at magnifications of 50 to determine an average number of observation areas, which was divided by the areas of the observation regions to calculate the number of the carbides.

(Amount of Residual Austenite)

The resulting cold rolled annealed sheets were hardened under the conditions shown in Tables 2 and 3, subzero-treated at -70°C, and tempered at 200°C. The cross sections of the resulting tempered samples, which were parallel to the rolling direction and thickness direction, were measured using EBSD, and the phases of the BCC and FCC crystalline structures were then distinguished and their respective areas were determined. Then, based on these areas, the ratio of the area of the phase of FCC crystalline structure to the total area of the phases of BCC and FCC crystalline structure (i.e., the area ratio (%) of the phase of FCC crystalline structure) was calculated, and the calculated area ratio of the phase of FCC crystalline structure was considered to be the amount of residual austenite (% by volume).

The above evaluation results are shown in Table 4.

[Table 4]

| | Steel Nos. | [C] + 0.3[N] (mass %) | Vickers Hardness (HV) | | Corrosion Resistance | Average Grain Size of Carbide (µm) | Number of Carbides with 10 µm or more (Carbides/cm²) | Amount of Residual Austenite (volume %) |
|---|---|---|---|---|---|---|---|---|
| | | | Before Hardening or Hardening and Tempering | After Hardening or Hardening and Tempering | | | | |
| Ex. 1 | A1 | 0.38 | 223 | 766 | ○ | 0.36 | 0.08 | 5.5 |
| Ex. 2 | A2 | 0.19 | 157 | 506 | ◎ | 0.16 | 0.04 | 4.8 |
| Ex. 3 | A3 | 0.31 | 220 | 618 | ○ | 0.18 | 0.09 | 3.6 |
| Ex. 4 | A4 | 0.27 | 269 | 604 | ○ | 0.22 | 0.06 | 5.3 |
| Ex. 5 | A5 | 0.30 | 255 | 684 | ○ | 0.14 | 0.03 | 2.0 |
| Ex. 6 | A6 | 0.30 | 179 | 596 | ○ | 0.10 | 0.07 | 3.5 |
| Ex. 7 | A7 | 0.29 | 178 | 608 | ○ | 0.13 | 0.09 | 5.7 |
| Ex. 8 | A8 | 0.27 | 167 | 594 | ○ | 0.35 | 0.04 | 4.5 |
| Ex. 9 | A9 | 0.30 | 245 | 703 | ◎ | 0.15 | 0.05 | 4.6 |
| Ex. 10 | A10 | 0.29 | 234 | 594 | ○ | 0.34 | 0.06 | 3.9 |
| Ex. 11 | A11 | 0.25 | 172 | 570 | ○ | 0.39 | 0.09 | 5.8 |
| Ex. 12 | A12 | 0.26 | 212 | 662 | ○ | 0.37 | 0.08 | 2.3 |
| Ex. 13 | A13 | 0.29 | 225 | 635 | ◎ | 0.25 | 0.07 | 5.5 |
| Ex. 14 | A14 | 0.34 | 259 | 629 | ○ | 0.31 | 0.07 | 3.4 |
| Ex. 15 | A15 | 0.30 | 127 | 589 | ○ | 0.32 | 0.03 | 2.7 |
| Ex. 16 | A16 | 0.25 | 265 | 566 | ○ | 0.26 | 0.03 | 2.6 |
| Ex. 17 | A17 | 0.32 | 191 | 631 | ○ | 0.28 | 0.01 | 3.0 |
| Ex. 18 | A18 | 0.25 | 289 | 634 | ○ | 0.35 | 0.02 | 2.3 |
| Ex. 19 | A19 | 0.26 | 146 | 621 | ○ | 0.33 | 0.02 | 4.5 |
| Ex. 20 | A20 | 0.26 | 208 | 654 | ○ | 0.36 | 0.07 | 3.4 |
| Ex. 21 | A18 | 0.30 | 219 | 640 | ◎ | 0.41 | 0.06 | 3.9 |
| Ex. 22 | A19 | 0.28 | 164 | 632 | ◎ | 0.26 | 0.07 | 4.5 |
| Comp. 1 | B1 | 0.49 | 362 | 490 | × | 1.23 | 1.07 | 34.5 |
| Comp. 2 | B2 | 0.12 | 126 | 477 | ○ | 0.19 | 0.05 | 2.3 |
| Comp. 3 | B3 | 0.29 | 176 | 438 | ○ | 0.24 | 0.02 | 2.9 |
| Comp. 4 | B4 | 0.28 | 238 | 491 | ○ | 0.32 | 0.05 | 22.1 |
| Comp. 5 | B5 | 0.30 | 281 | 667 | ○ | 0.72 | 0.55 | 4.0 |
| Comp. 6 | B6 | 0.29 | 273 | 482 | × | 0.45 | 0.04 | 23.1 |
| Comp. 7 | B7 | 0.27 | 248 | 445 | ○ | 0.23 | 0.04 | 18.2 |
| Comp. 8 | B8 | 0.26 | 180 | 447 | ○ | 0.21 | 0.05 | 2.5 |
| Comp. 9 | B9 | 0.27 | 225 | 459 | ○ | 0.25 | 0.05 | 3.4 |
| Comp. 10 | B10 | 0.30 | 212 | 445 | × | 0.32 | 0.09 | 5.3 |
| Comp. 11 | B11 | 0.30 | 217 | 674 | × | 0.19 | 0.06 | 5.0 |
| Comp. 12 | B12 | 0.29 | 190 | 620 | × | 0.21 | 0.08 | 2.0 |
| Comp. 13 | A19 | 0.25 | 173 | 481 | × | 1.35 | 1.03 | 14.4 |
| Comp. 14 | A19 | 0.25 | 189 | 454 | × | 1.24 | 2.01 | 18.1 |
| Comp. 15 | A19 | 0.27 | 513 | 641 | ○ | 0.39 | 0.06 | 4.8 |
| Comp. 16 | A19 | 0.26 | 420 | 570 | ○ | 0.27 | 0.03 | 5.1 |
| Comp. 17 | B13 | 0.33 | 205 | 451 | × | 0.29 | 0.07 | 13.6 |

The underlines indicate that the contents are outside the scope of the present invention.

As shown in Table 4, the cold rolled tempered sheets (martensitic stainless steel materials) according to Examples 1 to 22 could control the [C] + 0.3[N] to 0.15% or more, the Vickers hardness to 320 HV or less before hardening or hardening and tempering, the average grain size of carbides to 0.50 μm or less, the number of carbides having a size of 10 μm or more to 0.10 carbides/cm² or less, and the amount of residual austenite after hardening and tempering to 10.0% by volume or less. Since the cold rolled tempered sheets according to Examples 1 to 22 also have good hardness (Vickers hardness) and corrosion resistance after hardening or hardening and tempering, and a smaller average grain size of the carbides, the workability would be good and irregular patterns could be suppressed. Examples 21 and 22 are examples in which the soaking step was conducted. In the soaking, the corrosion resistance was improved by controlling the heating temperature to 1000°C or higher and lower than 1200°C and the heating time to 1 and 24 hours.

In contrast, the cold rolled tempered sheets according to Comparative Examples 1 to 17 was outside the specified range for any of the composition, [C] + 0.3[N], Vickers hardness before hardening or hardening and tempering, average grain size of carbides, number of carbides having a size of 10 μm or more, and amount of residual austenite after hardening and tempering. Therefore, the cold rolled annealed sheets according to Comparative Examples 1 to 17 did not have the desired properties.

Here, FIG 1 illustrates a graph showing a relationship between [C] + 0.3[N] in which [C] is an amount of solid solution of C (% by mass) and [N] is an amount of solid solution of N (% by mass) after hardening or hardening and tempering and a Vickers hardness according to some Examples and Comparative Examples. As shown in FIG. 1, it was found that there is a proportional relationship between [C] + 0.3[N] and the Vickers hardness, and that an increase in [C] + 0.3[N] tends to increase the Vickers hardness. In particular, it was found that the control of [C] + 0.3[N] to 0.15% or more can provide the Vickers hardness of 500HV or more.

Next, the resulting cold rolled annealed sheets were used to produce a cutting article as follows.

First, the resulting cold rolled annealed sheet was punched out and then ground to form a cutting article shape, hardened under the conditions shown in Tables 2 and 3, subzero-treated at -70°C, and tempered at 200°C. The surface was then polished, and a part that would become the cutting edge was then roughly polished and finish-polished to form the cutting edge, thereby obtaining a cutting article. The following evaluations were performed on each cutting article obtained as described above.

(Workability of Cutting Article)

When the cutting article was ground into the cutting article shape before hardening, those which did not experience seizure were determined to be acceptable (circle), and those which experienced seizure and were heated to generate scales were determined to be fail (x).

(Sharpness of Cutting Article)

The sharpness of the cutting article was evaluated using the Honda type Sharpness Tester.

For the sharpness testing, the cutting article was fixed and a reciprocating motion of 20 mm was performed while applying a load of about 750 g to a stack of 7.5 mm wide newspaper-equivalent paper (having a thickness of about 70 μm). One hundred cycles were performed with one reciprocating motion as one cycle, and the number of sheets of paper that were completely cut was counted. Sharpness can be evaluated as good when the number of sheets of paper cut is 50 or more.

(Surface Patterns of Cutting Article)

The resulting cutting articles were evaluated by observing irregular patterns on the cutting article surfaces with the naked eyes. In this evaluation, those in which no irregular patterns were observed were considered to be excellent (double circle), those in which very minor patterns were observed were considered to be acceptable (circle), and those in which irregular patterns were observed were considered to be fail (×).

The results of the above evaluations are shown in Table 5.

[Table 5]

| | Workability | Sharpness (Number of Sheets Cut) | Irregular Patterns |
|---|---|---|---|
| Ex. 1 | ○ | 85 | ○ |
| Ex. 2 | ○ | 54 | ◎ |
| Ex. 3 | ○ | 64 | ○ |
| Ex. 4 | ○ | 61 | ○ |
| Ex. 5 | ○ | 78 | ○ |
| Ex. 6 | ○ | 61 | ○ |
| Ex. 7 | ○ | 62 | ○ |
| Ex. 8 | ○ | 58 | ○ |
| Ex. 9 | ○ | 78 | ○ |
| Ex. 10 | ○ | 58 | ○ |
| Ex. 11 | ○ | 56 | ○ |
| Ex. 12 | ○ | 77 | ○ |
| Ex. 13 | ○ | 72 | ○ |
| Ex. 14 | ○ | 67 | ○ |
| Ex. 15 | ○ | 58 | ○ |
| Ex. 16 | ○ | 52 | ○ |
| Ex. 17 | ○ | 68 | ○ |
| Ex. 18 | ○ | 72 | ○ |
| Ex. 19 | ○ | 67 | ○ |
| Ex. 20 | ○ | 71 | ○ |
| Ex. 21 | ○ | 82 | ◎ |
| Ex. 22 | ○ | 81 | ◎ |
| Comp. 1 | × | 44 | × |
| Comp. 2 | ○ | 45 | × |
| Comp. 3 | ○ | 41 | × |
| Comp. 4 | ○ | 48 | × |
| Comp. 5 | ○ | 47 | × |
| Comp. 6 | ○ | 47 | × |
| Comp. 7 | ○ | 42 | × |
| Comp. 8 | ○ | 43 | × |
| Comp. 9 | ○ | 44 | × |
| Comp. 10 | ○ | 42 | × |
| Comp. 11 | ○ | 63 | ○ |
| Comp. 12 | ○ | 60 | ○ |
| Comp. 13 | ○ | 45 | × |
| Comp. 14 | ○ | 43 | × |
| Comp. 15 | × | 70 | ○ |
| Comp. 16 | × | 52 | ○ |
| Comp. 17 | ○ | 44 | ○ |

As shown in Table 5, the cutting articles made from the cold rolled annealed sheets (martensitic stainless steel materials) according to Examples 1 to 22 and Comparative Examples 11 and 12 had good workability and sharpness, and also suppressed the generation of irregular patterns. In particular, Examples 21 and 22 are examples in which the soaking step was conducted. In the soaking, the heating temperature was controlled to 1000°C or higher and lower than 1200°C and the heating time to 1 to 24 hours, thereby improving the sharpness and having a higher effect of suppressing the generation of irregular patterns. Comparative Examples 11 and 12 are considered to have insufficient corrosion resistance based on the above results.

In contrast, the cutting articles made from the cold rolled tempered sheets according to Comparative Examples 1, 15, and 16 had insufficient workability. The cutting articles made from the cold rolled tempered sheets according to Comparative Examples 1 to 10, 13 and 14 did not have sufficient sharpness and could not suppress irregular patterns. Furthermore, the cutting articles made from the cold rolled tempered sheet according to Comparative Example 17 did not have sufficient sharpness.

As can be seen from the above results, according to this invention, it is possible to provide a martensitic stainless steel material, which has good workability because it is soft after hardening or hardening and tempering, has higher hardness and corrosion resistance after hardening or hardening and tempering, and can suppress generation of irregular patterns, and a method for producing the same. Also, according to this invention, it is possible to provide a method for producing a cutting article that is easily machined, has high hardness and corrosion resistance, good sharpness, and can suppress generation of irregular patterns.

**Claims**

1.    A martensitic stainless steel material having a composition comprising, on a mass basis, C: 0.305 to 0.600%; Si: 0.05 to 1.00%; Mn: 0.05 to 2.50%; P: 0.0085 to 0.0400%; S: 0.0300% or less; Cr: 13.0 to 18.0%; Ni: 0.01 to 1.00%; Mo: 0.01 to 1.00%; Al: 0.100% or less; N: 0.010 to 0.350%; Ca: 0.0001 to 0.0050%; and O: 0.001 to 0.010%, the balance being Fe and impurities,

wherein the martensitic stainless steel material has:

an average grain diameter of carbides of 0.50 $\mu$m or less;
a number of carbides having a size of 10 $\mu$m or more of 0.10 carbides/cm$^2$ or less;
a Vickers hardness of 320 HV or less before hardening or hardening and tempering;
an amount of residual austenite of 10.0% by volume or less after hardening or hardening and tempering; and
[C] + 0.3 [N] of 0.15% by mass or more, in which [C] is an amount of solid solution of C (% by mass) and [N] is an amount of solid solution of N (% by mass) after hardening or hardening and tempering.

2.    The martensitic stainless steel material according to claim 1, further comprising, on a mass basis, at least one of V: 0.50% or less; Nb: 0.50% or less; Ti: 0.30% or less; Cu: 4.0% or less; Sn: 0.10% or less; B: 0.005% or less; and Co: 0.30% or less.

3.    The martensitic stainless steel material according to claim 1 or 2, wherein the martensitic stainless steel material has a Vickers hardness of 500 HV or more after hardening or hardening and tempering.

4.    The martensitic stainless steel material according to any one of claims 1 to 3, wherein the martensitic stainless steel material is for cutting articles.

5.    A method for producing a martensitic stainless steel material, the method comprising:

a breakdown rolling step of subjecting a slab to a heat treatment at a temperature of 1000°C or higher and lower than 1200°C for 1 to 10 hours, and then rough-rolling it under conditions of the total reduction in thickness of 30 to 70% and including two or more passes with a reduction in thickness of 10% or more per pass, the slab having a composition comprising, on a mass basis, C: 0.305 to 0.600%; Si: 0.05 to 1.00%; Mn: 0.05 to 2.50%; P: 0.0085 to 0.0400%; S: 0.0300% or less; Cr: 13.0 to 18.0%; Ni: 0.01 to 1.00%; Mo: 0.01 to 1.00%; Al: 0.100% or less; N: 0.010 to 0.350%; Ca: 0.0001 to 0.0050%; and O: 0.001 to 0.010%, the balance being Fe and impurities;
a hot rolling step of subjecting the breakdown material to a heat treatment at a temperature of 1000°C or higher and lower than 1200°C for 1 to 5 hours and then hot-rolling it to obtain a hot rolled material; and
a softening step of winding the hot rolled material at a winding temperature of 800°C to 900°C, and then heating it at a temperature of Ac1 point to (Ac1 point - 50°C) for 1 to 5 hours.

6.    The method for producing a martensitic stainless steel material according to claim 5, further comprising a soaking step of maintaining the breakdown material at a temperature of 1000°C or higher and lower than 1200°C for 1 to 24 hours between the breakdown rolling step and the hot rolling step.

7. The method for producing a martensitic stainless steel material according to claim 5 or 6, wherein the slab further comprises, on a mass basis, at least one of V: 0.50% or less; Nb: 0.50% or less; Ti: 0.30% or less; Cu: 4.0% or less; Sn: 0.10% or less; B: 0.005% or less; and Co: 0.30% or less.

8. The method for producing a martensitic stainless steel material according to any one of claims 5 to 7, further comprising:

a cold rolling step of cold-rolling the softened material obtained in the softening step to obtain a cold rolled material; and
an annealing step of heating the cold rolled material in a temperature range from 100°C to Ac1 point to (Ac1 point - 50°C) at a heating rate of 50°C/s or more.

9. A method for producing a cutting article, the method comprising a hardening step of processing the martensitic stainless steel material according to any one of claims 1 to 4, then heating it at a temperature of 1000°C to 1200°C for 5 to 60 minutes and cooling it at a cooling rate of 3°C/s or more.

[FIG. 1]

## INTERNATIONAL SEARCH REPORT

| International application No. |
| --- |
| **PCT/JP2024/015180** |

| A. | CLASSIFICATION OF SUBJECT MATTER |
| --- | --- |

*C22C 38/00*(2006.01)i; *C21D 8/02*(2006.01)i; *C21D 9/18*(2006.01)i; *C21D 9/46*(2006.01)i; *C22C 38/58*(2006.01)i
FI:   C22C38/00 302Z; C21D9/46 Q; C21D9/46 Z; C21D8/02 D; C21D9/18; C22C38/58

According to International Patent Classification (IPC) or to both national classification and IPC

| B. | FIELDS SEARCHED |
| --- | --- |

Minimum documentation searched (classification system followed by classification symbols)

C22C38/00; C21D8/02; C21D9/18; C21D9/46; C22C38/58

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2022/153790 A1 (NIPPON STEEL STAINLESS STEEL CORP.) 21 July 2022 (2022-07-21)<br>claims, paragraph [0002], table 1, paragraph [0055] | 1-4, 9 |
| A | | 5-8 |
| X | WO 2022/191085 A1 (NIPPON STEEL STAINLESS STEEL CORP.) 15 September 2022 (2022-09-15)<br>claims, paragraphs [0001], [0086], table 1, A19, A21 | 2-4, 9 |
| A | | 1, 5-8 |
| X | JP 2018-009231 A (NIPPON STEEL & SUMIKIN STAINLESS STEEL CORPORATION) 18 January 2018 (2018-01-18)<br>claims, paragraphs [0044], [0048], [0050], tables 1-3, test no. A5, A7 | 2-4, 9 |
| A | | 1, 5-8 |
| A | WO 2021/124511 A1 (NIPPON STEEL STAINLESS STEEL CORP.) 24 June 2021 (2021-06-24) | 1–9 |

| ☐ Further documents are listed in the continuation of Box C. | ☑ See patent family annex. |
| --- | --- |

\*    Special categories of cited documents:
"A"   document defining the general state of the art which is not considered to be of particular relevance
"D"   document cited by the applicant in the international application
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
| --- | --- |
| **08 July 2024** | **16 July 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/015180**

| Patent document cited in search report | | | Publication date (day/month/year) | Patent family member(s) | Publication date (day/month/year) |
|---|---|---|---|---|---|
| WO | 2022/153790 | A1 | 21 July 2022 | US 2023/0357906 A1 claims, paragraph [0002], table 1, paragraph [0075] EP 4279618 A1 CN 116323991 A KR 10-2023-0069179 A | |
| WO | 2022/191085 | A1 | 15 September 2022 | US 2024/158879 A1 claims, paragraphs [0001], [0136], table 1 A19, A21 EP 4306661 A1 CN 117062927 A KR 10-2023-0148843 A | |
| JP | 2018-009231 | A | 18 January 2018 | (Family: none) | |
| WO | 2021/124511 | A1 | 24 June 2021 | (Family: none) | |

Form PCT/ISA/210 (patent family annex) (July 2022)

**EP 4 675 002 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000273587 A
- JP 2018009231 A
- JP 2003313612 A
- WO 2019146743 A1
- WO 2021220754 A1